# EUROPÄISCHE PATENTSCHRIFT

(11) **EP 1 672 759 B1**
(45) Veröffentlichungstag und Bekanntmachung des Hinweises auf die Patenterteilung: **08.08.2007**
(21) Anmeldenummer: 05025934.0
(22) Anmeldetag: 29.11.2005
(51) Int. Cl.: H02G 3/12, H02G 3/08

(54) **Geräteeinbaurahmen für den frontrastenden Einbau von Elektro-Installationsgeräten**
Frame for frontal flush snapmounting of electrical installation apparatus
Cadre de montage à affleurement par encliquetage de face d' un appareillage d'installation électrique .

(30) Priorität: 15.12.2004 DE 202004019345 U
(43) Veröffentlichungstag der Anmeldung: 21.06.2006
(73) Patentinhaber: Tehalit GmbH, 67716 Heltersberg (DE)
(72) Erfinder: Arnold, Hans-Joachim, 67706 Krickenbach (DE); Moschenros, Michel, 67240 Kurtzenhouse (FR); Schwarz, Jürgen, 67705 Trippstadt (DE)
(74) Vertreter: Patentanwälte Möll und Bitterich

(56) Entgegenhaltungen:
- EP-A- 0 289 410
- DE-A1- 10 227 401
- DE-U1- 8 405 523
- FR-A- 2 776 134

## Beschreibung

Die Erfindung betrifft Geräteeinbaurahmen mit einer zentralen Öffnung für den frontrastenden Einbau von einem oder mehreren Elektro-Installationsgeräten in Geräteeinbaukanäle gemäß dem Oberbegriff des Anspruchs 1.

Der frontrastende Einbau von Elektro-Installationsgeräten in Kabelkanäle mit U- oder C-förmigem Querschnitt stellt erhebliche Anforderungen an den Konstrukteur. Einerseits sollen die Geräte und Geräteeinbaurahmen leicht zu montieren und zu demontieren sein, auf der anderen Seite müssen sie erheblichen Kräften standhalten. Dies gilt insbesondere für Steckdosen. Geräteeinbaurahmen, die die geforderten Bedingungen mehr oder weniger gut erfüllen, sind bekannt aus DE 78 03 034 U, EP 0 913 902 A, EP 1 271 734 A, EP 0 844 714 A oder EP 1 059 719 B.

Oftmals besteht der Wunsch oder auch die Notwendigkeit, mehrere Elektro-Installationsgeräte direkt nebeneinander zu montieren oder weitere Elektro-Installationsgeräte an eine schon bestehende Installation anzureihen. Sind die Elektro-Installationsgeräte wie hier in einen Geräteeinbaurahmen eingesetzt, so muss ein neuer, größerer Rahmen verwendet werden. Dazu müssen die Elektro-Installationsgeräte aus dem bisherigen Rahmen ausgebaut und der Rahmen entfernt werden. Ist der Geräteeinbaurahmen geschlossen, so müssen zusätzlich noch die elektrischen Leitungen von den Installationsgeräten abgenommen und später wieder angebracht werden. Das ist unbefriedigend.

Der vorliegenden Erfindung liegt die Aufgabe zugrunde, einen Geräteeinbaurahmen anzugeben, der einfach zu montieren, einfach zu justieren und einfach zu demontieren ist und der nachträglich bequem erweitert und bestückt werden kann.

Diese Aufgabe wird gelöst durch einen Geräteeinbaurahmen mit den Merkmalen des Anspruchs 1.

Die vorliegende Erfindung geht aus von einem im Grundzustand zweiteiligen Geräteeinbaurahmen, der mit einer bestimmten Mindestanzahl von Elektro-Installationsgeräten, z. B. einem einzigen, voll bestückt ist. Die beiden Rahmenteile sind steckbar. Dank der Zweiteiligkeit können bereits verdrahtete Elektro-Installationsgeräte problemlos ein- und ausgebaut werden.

Für den Fall, dass mehr Elektro-Installationsgeräte eingebaut werden sollen, als es der Basisversion des Geräteeinbaurahmens entspricht, sind paarweise Verlängerungsleisten vorgesehen, die zwischen die Basis-Rahmenteile gesteckt werden. Die Länge der Verlängerungsleisten kann wieder auf eine bestimmte Mindestanzahl von Elektro-Installationsgeräten abgestimmt sein, z. B. auf ein einziges.

Um die Festigkeit der Steckverbindungen zu erhöhen, können gemäß einer Weiterbildung an den Stecknasen federnde Nasen vorgesehen sein. Diese Federnasen erhöhen die Reibung.

Gemäß einer Ausgestaltung hierzu können an den mit den Stecknasen korrespondierenden Stecköffnungen Vertiefungen oder Durchbrüche vorgesehen sein, die mit den federnden Nasen kooperieren. Auf diese Weise entsteht eine formschlüssige Verbindung.

Um den Stoß zwischen den Geräteeinbaurahmen und den benachbarten Kanaldeckeln zu kaschieren, kann an der Basis der Rahmenteile jeweils ein Ausschnitt vorgesehen werden, so dass die Kanaldeckel unter den Geräteeinbaurahmen geschoben werden können.

Gemäß einer Weiterbildung der Erfindung ist ein U-förmiges drittes Rahmenteil vorgesehen, welches anstelle des leistenförmigen zweiten Rahmenteils verwendet werden kann.

Zur Befestigung der Geräteeinbaurahmen können gemäß einer Ausgestaltung der Erfindung an der Unterseite der Rahmenteile und/oder der Verlängerungsleisten Rastzungen und/oder Rastnasen vorgesehen sein, die mit dem Kanalunterteil und insbesondere dessen Deckelhalteprofilen kooperieren.

Anhand der Zeichnung soll die Erfindung in Form von Ausführungsbeispielen näher erläutert werden. Es zeigen jeweils in isometrischer Darstellung
- Fig. 1: eine Untersicht eines ersten Geräteeinbaurahmens,
- Fig. 2: eine Untersicht des Geräteeinbaurahmens der Fig. 1 mit Verlängerungen und
- Fig. 3: eine Draufsicht auf den Geräteeinbaurahmen der Fig. 2 im montierten Zustand.

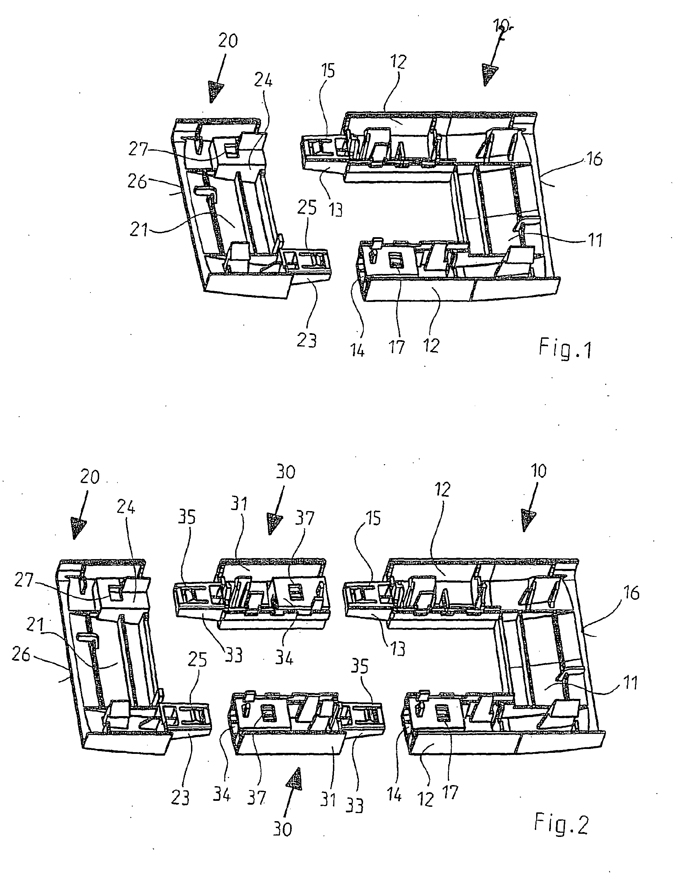

Fig. 1 zeigt in isometrischer Darstellung eine Untersicht eines ersten Geräteeinbaurahmens vor dessen Montage. Man erkennt zwei Rahmenteile 10, 20. Das U-förmige erste Rahmenteil 10 besitzt eine Basis 11 und zwei Schenkel 12. Am Ende des einen Schenkels 12 ist eine Stecknase 13 vorgesehen, am Ende des anderen Schenkels 12 eine entsprechende Stecköffnung 14.

Das leistenförmige zweite Rahmenteil 20 besitzt ebenfalls eine Basis 21, jedoch keine Schenkel. Stattdessen ist eine Stecknase 23 direkt an der Basis 21 angeformt. Die entsprechende Stecköffnung 24 ist in die Basis 21 eingeformt. Die Stecknasen 13, 23 korrespondieren mit den entsprechenden Stecköffnungen 14, 24 des jeweils anderen Rahmenteils 10, 20.

An den Stecknasen 13, 23 sind federnde Nasen 15, 25 angeformt. In die Wände der Stecköffnungen 14, 24 sind Vertiefungen bzw. Durchbrüche 17, 27 eingeformt. Sobald die Rahmenteile 10, 20 zusammengesteckt sind, rasten die federnden Nasen 15, 25 in die Vertiefungen 17, 27 ein und fixieren die beiden Rahmenteile 10, 20.

Falls keine formschlüssige Verbindung erforderlich ist, können die Vertiefungen 17, 27 entfallen. In diesem Fall erhöhen die federnden Nasen 15, 25 die Reibung zwischen den beiden Rahmenteilen 10, 20.

Fig. 2 zeigt in isometrischer Darstellung eine Untersicht des Geräteeinbaurahmens der Fig. 1, wobei zwischen die Rahmenteile 10, 20 ein Paar Verlängerungsleisten 30 eingesetzt ist. Die Verlängerungsleisten 30 besitzen eine gerade gestreckte Basis 31, an deren einem Ende eine Stecknase 33 mit federnder Nase 35 und an deren anderem Ende eine Stecköffnung 34, gegebenenfalls mit Vertiefung 37, eingeformt ist.

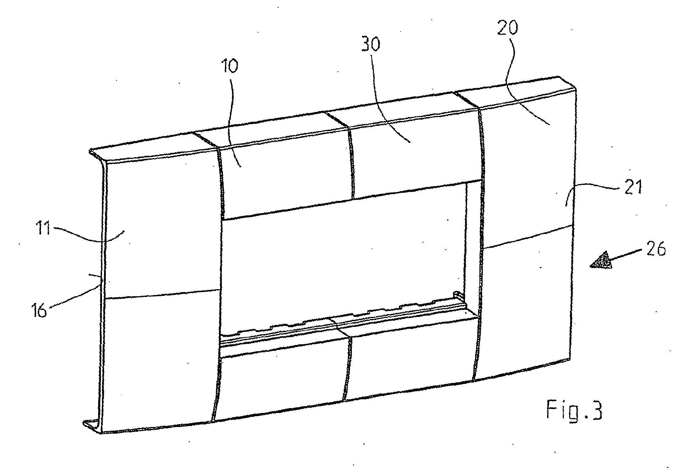

Fig. 3 zeigt in isometrischer Darstellung eine Draufsicht auf den Geräteeinbaurahmen der Fig. 2 im fertig montierten Zustand. Erkennbar ist hier auch ein Ausschnitt 16 an der Unterseite der Basis 11. Dieser Ausschnitt 16 erlaubt es, einen Kanaldeckel eines Geräteeinbaukanals (nicht dargestellt) unter das Rahmenteil 10 zu schieben, so dass der Stoß kaschiert wird.

Ein entsprechender Ausschnitt 26 befindet sich unter der Basis 21 des zweiten Rahmenteils 20.

Es versteht sich, dass die Abmessungen der verschiedenen Rahmenteile 10, 20, 30, 40 auf die Abmessungen der einzusetzenden Elektro-Installationsgeräte abgestimmt sind, so dass jeweils eine ganze Anzahl von Elektro-Installationsgeräten lückenlos montiert werden kann.

## Patentansprüche

1. Geräteeinbaurahmen mit einer zentralen Öffnung für den frontrastenden Einbau von einem oder mehreren Elektro-Installationsgeräten in Geräteeinbaukanäle, bestehend aus einem Kanalunterteil mit U- bzw. C-förmigem Querschnitt und einem aufrastbaren Kanaldeckel, umfassend
- ein U-förmiges erstes Rahmenteil (10) mit
- einer Basis (11),
- zwei Schenkeln (12),
- einer Stecknase (13) am einen Schenkel (12)
- und einer korrespondierenden Stecköffnung (14) im anderen Schenkel (12),
- ein leistenförmiges zweites Rahmenteil (20) mit
- einer Basis (21),
- einer Stecknase (23), die mit der Stecköffnung (14) am ersten Rahmenteil (10) kooperiert,
- und einer Stecköffnung (24), die mit der Stecknase (13) am ersten Rahmenteil (10) kooperiert, und gegebenenfalls
- ein Paar getrennter Verlängerungsleisten (30) mit je
- einer Basis (31),
- einer Stecknase (33), die mit den Stecköffnungen (14, 24) der Rahmenteile (10, 20) kooperiert, am einen Ende
- und einer Stecköffnung (34), die mit der Stecknase (13, 23) der Rahmenteile (10, 20) kooperiert, am anderen Ende, **gekennzeichnet durch**
- Rastzungen und/oder Rastnasen an der Unterseite der Rahmenteile (10, 20, 40) und/oder der Verlängerungsleisten (30), die mit dem Kanalunterteil kooperieren.

2. Geräteeinbaurahmen nach Anspruch 1, **gekennzeichnet durch** federnde Nasen (15, 25, 35) an den Stecknasen (13, 23, 33).

3. Geräteeinbaurahmen nach Anspruch 2, **gekennzeichnet durch** Vertiefungen oder Durchbrüche (17, 27), die mit den federnden Nasen (15, 25, 35) kooperieren, an den Stecköffnungen (14, 24, 34).

4. Geräteeinbaurahmen nach einem der Ansprüche 1 bis 3, **gekennzeichnet durch** einen Ausschnitt (16, 26), der mit dem Kanaldeckel kooperiert, an der Basis (11, 21) der Rahmenteile (10, 20).

5. Geräteeinbaurahmen nach einem der Ansprüche 1 bis 4, **gekennzeichnet durch** ein U-förmiges drittes Rahmenteil (40).

## Claims

1. Apparatus mounting frame with a central opening for the front-locking mounting of one or a plurality of electrical installation apparatus in apparatus mounting trunkings, consisting of a trunking lower part with a U- or C-shaped cross section and a lock-on trunking cover, comprising
- a U-shaped first frame part (10) with
- a base (11),
- two legs (12),
- a plug-in lug (13) at one leg (12)
- and a corresponding plug-in opening (14) in the other leg (12),
- a strip-shaped second frame part (20) with
- a base (21),
- a plug-in lug (23), which co-operates with the plug-in opening (14) at the first frame part (10),
- and a plug-in opening (24), which co-operates with the plug-in lug (13) at the first frame part (10), and optionally
- a pair of separate extension strips (30) in each case with
- a base (31),
- a plug-in lug (33), which co-operates with the plug-in openings (14, 24) of the frame parts (10, 20), at one end
- and a plug-in opening (34), which co-operates with the plug-in lug (13, 23) of the frame parts (10, 20), at the other end, **characterised by**
- locking tongues and/or locking lugs at the underside of the frame parts (10, 20, 40) and/or the extension strips (30), which co-operate with the trunking lower part.

2. Apparatus mounting frame according to Claim 1, **characterised by** resilient lugs (15, 25, 35) at the plug-in lugs (13, 23, 33).

3. Apparatus mounting frame according to Claim 2, **characterised by** recesses or apertures (17, 27), which co-operate with the resilient lugs (15, 25, 35), at the plug-in openings (14, 24, 34).

4. Apparatus mounting frame according to any one of Claims 1 to 3, **characterised by** a cut-out (16, 26), which co-operates with the trunking cover, at the base (11, 21) of the frame parts (10, 20).

5. Apparatus mounting frame according to any one of Claims 1 to 4, **characterised by** a U-shaped third frame part (40).

## Revendications

1. Cadre de montage d'appareils comportant une ouverture centrale pour le montage par enclenchement frontal d'un ou plusieurs appareils d'installation électrique dans des canalisations de montage d'appareils composées d'une partie inférieure de canalisation avec une section en forme de U ou de C et un couvercle de canalisation encliquetable, comprenant
- une première partie de cadre (10) en forme de U avec
- une base (11),
- deux côtés (12),
- un tenon d'emboîtement (13) sur un côté (12)
- et une ouverture d'emboîtement correspondante (14) sur l'autre côté (12),
- une seconde partie de cadre (20) en forme de bande avec
- une base (21),
- un tenon d'emboîtement (23) qui coopère avec l'ouverture d'emboîtement (14) sur la première partie de cadre (10),
- et une ouverture d'emboîtement (24) qui coopère avec le tenon d'emboîtement (13) sur la première partie de cadre (10), et le cas échéant
- une paire de bandes de rallonge (30) séparées avec chacune
- une base (31),
- un tenon d'emboîtement (33) qui coopère avec les ouvertures d'emboîtement (14, 24) des parties de cadre (10, 20) à une extrémité
- et une ouverture d'emboîtement (34) qui coopère avec le tenon d'emboîtement (13, 23) des parties de cadre (10, 20) à l'autre extrémité, **caractérisé par**
- des languettes d'enclenchement et/ou des ergots d'enclenchement sur la face inférieure des parties de cadre (10, 20, 40) et/ou des bandes de rallonge (30) qui coopèrent avec la partie inférieure de canalisation.

2. Cadre de montage d'appareils selon la revendication 1, **caractérisé par** des ergots élastiques (15, 25, 35) sur les tenons d'emboîtement (13, 23, 33).

3. Cadre de montage d'appareils selon la revendication 2, **caractérisé par** des renfoncements ou des ouvertures (17, 27), qui coopèrent avec les ergots élastiques (15, 25, 35), sur les ouvertures d'emboîtement (14, 24, 34).

4. Cadre de montage d'appareils selon l'une des revendications 1 à 3, **caractérisé par** une encoche (16, 26), qui coopère avec le couvercle de canalisation, sur la base (11, 21) des parties de cadre (10, 20).

5. Cadre de montage d'appareils selon l'une des revendications 1 à 4, **caractérisé par** une troisième partie de cadre (40) en forme de U.
